# FASCICULE DE BREVET EUROPEEN

(11) **EP 3 926 006 B1**
(45) Date de publication et mention de la délivrance du brevet: **27.12.2023**
(21) Numéro de dépôt: 21162894.6
(22) Date de dépôt: 16.03.2021
(51) Int. Cl.: C08K 7/22, C09J 133/04

(54) **COMPOSITION ADHESIVE COMPRENANT DES CHARGES ALLEGEES**
KLEBSTOFFZUSAMMENSETZUNG, DIE LEICHTFÜLLSTOFFE ENTHÄLT
ADHESIVE COMPOSITION COMPRISING LIGHTENED LOADS

(30) Priorité: 18.06.2020 FR 2006351
(43) Date de publication de la demande: 22.12.2021
(73) Titulaire: Bostik SA, 92700 Colombes (FR)
(72) Inventeur: CASIMIRO, Jessie, 77257 Brie Comte Robert Cedex (FR); SOUKHAVONG, Audrey, 77257 Brie Comte Robert Cedex (FR); BARBERI, Herve, 77257 Brie Comte Robert Cedex (FR)
(74) Mandataire: Arkema Patent

(56) Documents cités:
- WO-A1-02/44255
- KR-B1- 100 830 707
- KR-B1- 100 924 675
- US-A1- 2019 031 927

## Description

### Domaine de l'invention

La présente invention selon les revendications 1 à 15 concerne une composition adhésive ainsi que son utilisation pour appliquer un revêtement de surface souple sur un substrat et un procédé de collage correspondant.

### Arrière-Plan technique

Dans le domaine de la construction et de la décoration intérieure, il est connu de recouvrir un substrat, en particulier une surface plane, avec un revêtement spécifique afin d'y conférer des propriétés particulières, notamment pour des raisons énergétiques, thermiques, acoustiques, esthétiques, etc.

Le substrat à recouvrir peut être un sol, un mur ou un plafond, en particulier un sol. Il peut s'agir d'un substrat brut, par exemple un substrat en ciment ou un substrat formé de panneaux de bois, ou d'un substrat ayant fait l'objet d'un traitement de finition, par exemple une chape ou un ragréage.

Différents types de revêtement sont connus, à savoir les revêtements de surface souples et les revêtements de surface rigides. Les revêtements de surface souples correspondent aux revêtements en polymère, tels que les revêtements du type PVC (PVC homogène, PVC hétérogène et LVT) et les moquettes. Les revêtements de surface rigides correspondent notamment aux carrelages et aux parquets.

Afin d'assurer une bonne adhésion, des compositions adhésives (communément dénommées colles) sont appliquées entre le substrat à recouvrir et le revêtement de surface. Différentes compositions sont généralement appliquées en fonction du type de revêtement de surface utilisé. En particulier, lorsque la surface est recouverte par un revêtement de surface souple, tel qu'un revêtement en polymère ou une moquette, il est recommandé d'utiliser une composition adhésive permettant une adhésion homogène du revêtement de surface sans pli. Diverses compositions adhésives sont actuellement disponibles. Même si ces compositions peuvent être adaptées à l'application d'un revêtement de surface souple sur le substrat et présentent des propriétés mécaniques satisfaisantes, leur utilisation peut être contraignante. Ces compositions adhésives peuvent être difficiles à appliquer, ce qui nécessite de maîtriser la technique de pose et d'être dûment formé. Ces compositions adhésives peuvent également nécessiter l'application d'une grande quantité en poids et en volume de composition par mètre carré, ce qui augmente le prix de revient au mètre carré et/ou nécessite une grande capacité de stockage.

Des compositions adhésives, pour diverses applications, sont déjà connues. Des compositions sont par exemple divulguées dans les documents suivants : DE 102008013020 A1, WO 2002/044255 A1 et KR 100830707 B1. US2019/0031927 concerne notamment des compositions adhésibles, notamment pelable, comprenant un latex naturel, une composition polymérique, optionnellement au moins une charge ayant une densité apparente allant de 1,30 à 1,70.

KR100924675 concerne une composition adhésive pour céramique comprenant une résine acrylique, de 40% à 50% en poids d'une charge, de 3 à 7% en poids d'une charge allégée ayant une dnsité allant de 0,10 à 0,30 g/cm³.

Cependant, il existe toujours un besoin de fournir une composition adhésive, notamment pour la pose d'un revêtement de surface souple sur un substrat, dont l'application est facilitée, tout en maintenant de bonnes propriétés mécaniques de cohésion.

Il existe également un besoin de fournir une composition adhésive, notamment pour la pose d'un revêtement de surface souple sur un substrat, dont le rendement d'application est amélioré, afin de diminuer le prix de revient au mètre carré. En particulier, il existe un besoin de fournir une composition adhésive, dont le rendement d'application est amélioré, sans compromettre la stabilité de la composition dans le temps et/ou les performance d'application et d'adhésion. Il existe donc également un besoin de fournir une composition adhésive, dont le transport, la livraison et le maniement sur les chantiers sont facilités.

### Résumé de l'invention

L'invention concerne en premier lieu une composition adhésive, pour l'application d'un revêtement de surface souple sur un substrat, comprenant, par rapport au poids total de la composition adhésive :
- de 10 à 40 % en poids de matière sèche d'une composition polymérique comprenant au moins un copolymère ou un mélange d'au moins deux polymères comprenant au moins un monomère (méth)acrylate ou (méth)acrylique ;
- de 0,075 à 1,5 %, préférentiellement de 0,15 à 1,2 %, très préférentiellement de 0,15 à 0,75 %, en poids de matière sèche d'au moins une charge allégée ayant une masse volumique apparente inférieure ou égale à 0,1 g/cm³ ; préférentiellement de 0,01 à 0,1 g/cm³ ; très préférentiellement de 0,01 à 0,07 g/cm³ ;
- optionnellement au moins une deuxième charge allégée ayant une masse volumique apparente supérieure à 0,1 g/cm³ et inférieure ou égale à 0,95 g/cm³ ; préférentiellement de 0,15 à 0,70 g/cm³ ; très préférentiellement de 0,20 à 0,50 g/cm³ ;
- de 15 à 60 % en poids d'au moins une charge carbonatée ; et
- de 6 à 30 % en poids d'au moins une résine tackifiante.

Dans des modes de réalisation, la composition comprend de 15 à 35 % ; préférentiellement de 20 à 30 % ; en poids de matière sèche, par rapport au poids total de la composition adhésive, d'une composition polymérique comprenant au moins un copolymère ou un mélange de deux polymères comprenant au moins un monomère (méth)acrylate ou (méth)acrylique. Dans des modes de réalisation, la composition polymérique comprend de 35 à 70 % ; préférentiellement de 45 à 65 % ; très préférentiellement de 50 à 63 % ; encore plus préférentiellement de 58 à 62 %, en poids d'un copolymère ou un mélange d'au moins deux polymères comprenant au moins un monomère (méth)acrylate ou (méth)acrylique, par rapport au poids total de la composition polymérique.

Dans des modes de réalisation, les charges allégées sont des microsphères creuses, non-poreuses, dispersibles dans l'eau, et ayant une taille moyenne de particule (D50) de 1 à 100 µm ; préférentiellement de 25 à 70 µm.

Dans des modes de réalisation, les charges allégées ayant une masse volumique apparente inférieure ou égale à 0,1 g/cm³ sont des microsphères creuses obtenues à partir d'un matériau thermoplastique ; préférentiellement à partir de polymères dérivés d'hydrocarbures éthyléniques.

Dans des modes de réalisation, les deuxièmes charges allégées, ayant une masse volumique apparente supérieure à 0,1 g/cm³ et inférieure ou égale à 0,95 g/cm³, sont des microsphères creuses obtenues à partir de verre de silice.

Dans des modes de réalisation, la résine tackifiante est choisie parmi les colophanes d'origine naturelle ou modifiées, et leurs dérivés hydrogénés, dimérisés, polymérisés ou estérifiés par des mono-alcools ou des polyols. Dans des modes de réalisation, la charge carbonatée a une masse volumique apparente supérieure à 0,95 g/cm³ ; préférentiellement de 1,1 à 1,9 g/cm³ ; très préférentiellement de 1,3 à 1,7 g/cm³.

Dans des modes de réalisation, la charge carbonatée est choisie parmi les carbonates de métaux alcalins ou alcalino-terreux ; préférentiellement parmi le carbonate de calcium et le carbonate de magnésium ; très préférentiellement la charge carbonatée est le carbonate de calcium.

Dans des modes de réalisation, la composition comprend un ratio massique en matière sèche entre les charges allégées et les charges totales de 1 : 100 à 15 : 100 ; préférentiellement de 1 : 100 à 10 : 100.

Dans des modes de réalisation, la composition comprend un agent épaississant, un plastifiant, un solvant, un pigment, un absorbeur d'humidité, un stabilisant UV, un agent dispersant, un tamis moléculaire, un agent anti-mousse, un matériau fluorescent, un biocide et leurs mélanges.

Dans des modes de réalisation, la composition a une viscosité de 10 000 à 45 000 mP.s ; préférentiellement de 20 000 à 35 000 MPa.s.

L'invention concerne en deuxième lieu un procédé d'application d'un revêtement de surface souple sur un substrat comprenant les étapes suivantes :
- application d'une couche de composition adhésive décrite ci-dessus sur le substrat et/ou le revêtement de surface souple ; et
- application du revêtement de surface souple sur le substrat.

Dans des modes de réalisation, une quantité de composition adhésive inférieure ou égale à 290 g/m², préférentiellement inférieure ou égale à 280 g/m², très préférentiellement inférieure ou égale à 270 g/m², est appliquée. L'invention concerne en troisième lieu l'utilisation de la composition adhésive décrite ci-dessus, pour appliquer un revêtement de surface souple sur un substrat ; préférentiellement pour appliquer sur un sol un revêtement de surface souple choisi parmi les revêtements en polymère ou les moquettes. La présente invention permet de surmonter les inconvénients de l'état de la technique. Elle fournit plus particulièrement une composition adhésive ayant une performance d'adhésion, une stabilité dans le temps et des propriétés mécaniques de cohésion satisfaisantes. L'application de cette composition est également facilitée. En outre, le rendement d'application de cette composition est amélioré, ce qui permet de diminuer son prix de revient au mètre carré, par rapport aux compositions adhésives connues. Enfin, le transport, la livraison et le maniement de la composition adhésive sur les chantiers, par rapport aux compositions adhésives connues, sont facilités. En effet, les inventeurs ont démontré que la formulation d'une composition adhésive selon l'invention - notamment en ce qu'elle comprend au moins une charge carbonatée, au moins une charge allégée ayant une masse volumique apparente inférieure ou égale à 0,1 g/cm³ et optionnellement au moins une deuxième charge allégée ayant une masse volumique apparente supérieure à 0,1 g/cm³ et inférieure ou égale à 0,95 g/cm³ - était particulièrement satisfaisante pour permettre l'adhésion d'un revêtement de surface souple sur un substrat, et qu'elle présentait les avantages exposés ci-dessus. En particulier, les inventeurs ont démontré de manière surprenante que l'incorporation de charges allégées spécifiques en remplacement partiel des charges conventionnelles, permettait d'en faciliter l'application, d'améliorer leur rendement d'application, sans réduire sa performance d'adhésion, sa stabilité dans le temps et ses propriétés mécaniques de cohésion.

### Description détaillée

L'invention est maintenant décrite plus en détail et de façon non limitative dans la description qui suit.

Par « masse volumique apparente » (ou « densité apparente »), on entend la masse volumique apparente mesurée par des méthodes classiques bien connues de l'homme du métier, par exemple par pesée d'un volume déterminé telle que décrite ci-dessous. La masse volumique apparente est définie par le rapport entre la masse du matériau et le volume apparent de l'ensemble des grains. La masse volumique apparente est exprimée en g/cm³.

Par « charge allégée », on entend une charge dont la masse volumique apparente est inférieure ou égale à 0,95 g/cm³.

Par « taille moyenne de particule », y inclus les charges ou les microsphères creuses, on entend la mesure de la taille pour une distribution granulométrique en volume et correspondant à 50 % en volume de l'échantillon de particules analysées. Lorsque les particules sont sphériques, la taille moyenne de particules correspond au diamètre médian (D50 ou Dv50) qui correspond au diamètre tel que 50 % des particules en volume ont une taille exprimée en micromètres et déterminée selon la norme NF ISO 13320-1 (1999) par diffraction laser sur un appareil de type MALVERN.

Par « sphère » ou « sphérique », y inclus pour les charges ou les microsphères creuses, on entend une particule présentant un rapport de forme proche de 1, allant de 0,5 à 1,5 par exemple, tel que des particules de forme oblongue, ovoïde, ellipsoïdales, et de préférence égale à 1, c'est-à-dire ayant une forme sphérique. Un tel rapport de forme est défini comme le rapport entre la distance maximale entre deux points de la surface de la particule, suivant une direction principale, sur la distance minimale entre deux points de la surface de la particule, suivant une direction sensiblement perpendiculaire à la direction principale.

### Composition adhésive

Dans un premier aspect, la présente invention concerne une composition adhésive, pour l'application (le collage) d'un revêtement de surface souple sur un substrat, comprenant, par rapport au poids total de la composition adhésive :
- de 10 à 40 % en poids de matière sèche d'une composition polymérique comprenant au moins un copolymère ou un mélange d'au moins deux polymères comprenant au moins un monomère (méth)acrylate ou (méth)acrylique ;
- de 0,075 à 1,5 %, préférentiellement de 0,15 à 1,2 %, très préférentiellement de 0,15 à 0,75 %, en poids de matière sèche d'une charge allégée ayant une masse volumique apparente inférieure ou égale à 0,1 g/cm³ ;
- optionnellement au moins une deuxième charge allégée ayant une masse volumique apparente supérieure à 0,1 g/cm³ et inférieure ou égale à 0,95 g/cm³ ;
- de 15 à 60 % en poids d'une charge carbonatée ; et
- de 6 à 30 % en poids d'au moins une résine tackifiante.

### Composition polymérique

Les copolymères ou les mélanges de polymères utilisés dans l'invention pour former la composition polymérique peuvent être sous la forme d'une dispersion aqueuse, ou d'une émulsion aqueuse, ou d'une poudre redispersable qui, après ajout d'eau, forme une solution aqueuse ; préférentiellement sous la forme d'une dispersion aqueuse. La forme sous laquelle est employée le copolymère ou le mélange de polymères dépend de sa solubilité dans l'eau.

L'incorporation de ces compositions polymériques est avantageuse en ce qu'elle permet d'augmenter davantage la cohésion de la composition adhésive et ainsi d'améliorer davantage ses performances mécaniques.

La composition adhésive comprend de 10 à 40 % ; préférentiellement de 15 à 35 % ; très préférentiellement de 20 à 30 % ; en poids de matière sèche, par rapport au poids total de la composition adhésive, d'une composition polymérique comprenant au moins un copolymère ou un mélange de deux polymères comprenant au moins un monomère (méth)acrylate ou (méth)acrylique.

Par « copolymère comprenant au moins un monomère (méth)acrylate ou (méth)acrylique », on entend un polymère formé à partir d'au moins deux monomères, dont au moins un monomère (méth)acrylate ou (méth)acrylique. Par « mélange de polymères comprenant au moins un monomère (méth)acrylate ou (méth)acrylique », on entend un mélange comprenant au moins deux polymères dont un polymère au moins est formé à partir de monomères (méth)acrylate ou (méth)acrylique.

Le monomère (méth)acrylate ou (méth)acrylique peut être choisi parmi l'acide acrylique, l'acide méthacrylique, l'acrylate de méthyle, le méthacrylate de méthyle, l'acrylate d'éthyle, le méthacrylate d'éthyle, l'acrylate de butyle, le méthacrylate de butyle, l'acrylate d'isobutyle, le méthacrylate d'isobutyle, l'acrylate de n-hexyle, le méthacrylate de n-hexyle, l'acrylate d'éthylhexyle, le méthacylate d'éthylhexyle, l'acrylate de n-heptyle, le méthacrylate de n-heptyle, l'acrylate de stéaryle, le méthacrylate de stéaryle, le méthacrylate de glycidyle, l'acrylamide, le méthacrylamide, l'acrylate d'hydroxyéthyle, le méthacrylate d'hydroxyéthyle, le méthacrylate d'allyle, l'acrylate de cyclohexyle, le méthacrylate de cyclohexyle, le 2-éthoxyéthyle-acrylate, le 2-éthoxyéthyle-méthacrylate, l'acrylate d'isodécyle, le méthacrylate d'isodécyle, le 2-méthoxy acrylate, le 2-éthoxy-méthacrylate, le 2-(2-éthoxyéthoxy)-éthylacrylate, l'acrylate de 2-phénoxyéthyle, le méthacrylate de 2-phénoxyéthyle, l'acrylate d'isobornyle, le méthacrylate d'isobornyle, l'acrylate de caprolactone, le méthacrylate de caprolactone, le monoacrylate de polypropylène glycol, le monométhacrylate de polypropylène glycol, l'acrylate de polyéthylène glycol, le méthacrylate de polyéthylène glycol, l'acrylate de benzyle, le méthacrylate de benzyle ou les mélanges.

Le copolymère ou le mélange de polymères comprenant au moins un monomère (méth)acrylate ou (méth)acrylique peut comprendre au moins un autre monomère choisis parmi l'acétate de vinyle, l'éthylène de vinyle, le styrène, le chlorure de vinyle, le versatate de vinyle, le laurate de vinyle ou leurs combinaisons.

Le copolymère ou le mélange d'au moins deux polymères comprenant au moins un monomère (méth)acrylate ou (méth)acrylique peut avoir une température de transition vitreuse (Tg) de -50 à 0°C ; préférentiellement de - 40 à -10°C ; très préférentiellement de -37 à -15°C. De manière classique, bien connue de l'homme du métier, la température de transition vitreuse peut être mesurée par DSC (pour « Differential Scanning Calorimetry » en anglais ou « calorimétrie différentielle à balayage » en français »).

La composition adhésive peut comprendre en outre au moins un autre polymère choisi parmi les polyesters, les polyuréthanes ou leurs mélanges. La composition adhésive peut comprendre de 0 à 15 % ; préférentiellement de 0 à 10 % ; très préférentiellement de 0 à 5 % ; en poids de cet autre polymère choisi parmi les polyesters, les polyuréthanes ou leur mélange par rapport au poids total de la composition adhésive.

La composition polymérique peut comprendre en outre au moins un autre polymère étant un copolymère d'acétate de vinyle et d'éthylène. Ce copolymère d'acétate de vinyle et d'éthylène peut être présent dans la composition polymérique ou peut être ajouté séparément à la composition adhésive.

La composition adhésive peut comprendre de 0 à 15 % ; préférentiellement de 0 à 10 % ; très préférentiellement de 0 à 5 % ; d'un copolymère d'acétate de vinyle et d'éthylène par rapport au poids total de la composition adhésive. La composition polymérique, pour incorporation dans la composition adhésive, peut comprendre de 35 à 70 % ; préférentiellement de 45 à 65 % ; très préférentiellement de 50 à 63 % ; encore plus préférentiellement de 58 à 62 %, en poids d'un copolymère ou un mélange d'au moins deux polymères comprenant au moins un monomère (méth)acrylate ou (méth)acrylique, par rapport au poids total de la composition polymérique (avant mélange).

Par exemple, des compositions polymériques, qui peuvent être utilisées pour la préparation de la composition adhésive selon l'invention, sont disponibles commercialement, notamment les compositions polymériques suivantes :
- PLEXTOL^{®} D 306 (disponible auprès de Synthomer) : dispersion aqueuse de résine acrylique pure à base de n-butylacrylate (98%) et de styrène (2%) ayant une température de transition vitreuse de -30°C ;
- VINNAPAS^{®} EAF 68 (disponible auprès de Wacker) : dispersion aqueuse de résine acrylique à base d'acétate de vinyle, d'éthylène et d'acrylate ayant une température de transition vitreuse de -35°C.

### Charges allégées

La composition selon l'invention comprend de 0,075 à 1,5 %, préférentiellement de 0,15 à 1,2 %, très préférentiellement de 0,15 à 0,75 %, en poids de matière sèche d'une charge allégée ayant une masse volumique apparente (matière sèche) inférieure ou égale à 0,1 g/cm³. Par exemple, la composition peut comprendre de 0,075 à 0,15 %, ou de 0,15 à 0,3 % ; ou de 0,3 à 0,45 % ; ou de 0,45 à 0,6 % ; ou de 0,6 à 0,75 % ; ou de 0,75 à 0,9 % ; ou de 0,9 à 1,05 % ; ou de 1,05 à 1,2 % ; ou de 1,2 à 1,35 % ; ou de 1,35 à 1,5 % en poids de matière sèche d'au moins une charge allégée ayant une masse volumique apparente (matière sèche) inférieure ou égale à 0,1 g/cm³. La composition peut comprendre également, préférentiellement de 0 à 5 %, très préférentiellement de 0 à 4 %, plus préférentiellement de 0 à 3 %, d'au moins une deuxième charge allégée ayant une masse volumique apparente (matière sèche) supérieure à 0,1 g/cm³ et inférieure ou égale à 0,95 g/cm³. Par exemple, la composition peut comprendre de 0 à 0,25 %, ou de 0,25 à 0,5 % ; ou de 0,5 à 0,75 % ; ou de 0,75 à 1 % ; ou de 1 à 1,25 % ; ou de 1,25 à 1,5 % ; ou de 1,5 à 1,75 % ; ou de 1,75 à 2 % ; ou de 2 à 2,25 % ; ou de 2,25 à 2,5 % ; ou de 2,5 à 2,75 % ; ou de 2,75 à 3 % ; ou de 3 à 3,25 % ; ou de 3,25 à 3,5 % ; ou de 3,5 à 3,75 % ; ou de 3,75 à 4 % ; ou de 4 à 4,25 % ; ou de 4,25 à 4,5 % ; ou de 4,5 à 4,75 % ; ou de 4,75 à 5 % en poids de matière sèche d'au moins une deuxième charge allégée ayant une masse volumique apparente (matière sèche) supérieure à 0,1 g/cm³ et inférieure ou égale à 0,95 g/cm³.

Dans un mode de réalisation, la composition est dépourvue d'une charge allégée autre que la charge allégée ayant une masse volumique apparente (matière sèche) inférieure ou égale à 0,1 g/cm³, et elle est notamment dépourvue d'une charge allégée ayant une masse volumique apparente (matière sèche) supérieure à 0,1 g/cm³ et inférieure ou égale à 0,95 g/cm³. Dans un mode de réalisation alternatif, la composition comprend, en tant que charges allégées, au moins une charge allégée ayant une masse volumique apparente (matière sèche) inférieure ou égale à 0,1 g/cm³ et au moins une charge allégée ayant une masse volumique apparente (matière sèche) supérieure à 0,1 g/cm³ et inférieure ou égale à 0,95 g/cm³. Dans ce mode de réalisation, la composition peut alors comprendre de 0,1 à 5 %, très préférentiellement de 0,5 à 4 %, plus préférentiellement de 0,5 à 3 %, d'au moins une deuxième charge allégée ayant une masse volumique apparente (matière sèche) supérieure à 0,1 g/cm³ et inférieure ou égale à 0,95 g/cm³. L'ajout d'au moins une charge allégée ayant une masse volumique apparente inférieure ou égale à 0,1 g/cm³, et optionnellement au moins une deuxième charge allégée ayant une masse volumique apparente supérieure à 0,1 g/cm³ et inférieure ou égale à 0,95 g/cm³, à la composition adhésive - notamment en combinaison avec une composition polymérique, au moins une charge carbonatée et au moins une résine tackifiante - est particulièrement avantageux en ce que la masse volumique de la charge totale de la composition, et ainsi son poids, sont diminués sans pour autant, et de manière surprenante, dégrader la cohésion de la composition adhésive, sa stabilité et ses propriétés mécaniques. En outre, les inventeurs ont démontré de manière surprenante que l'ajout de ces charges allégées permettait de faciliter l'application de la composition adhésive sur le substrat à recouvrir et/ou le revêtement de surface à poser. Enfin, les inventeurs ont démontré de manière surprenante que l'ajout de ces charges allégées permettait également d'améliorer le rendement d'application.

Les charges allégées sont préférentiellement dispersibles dans l'eau.

Les charges allégées sont préférentiellement non poreuses. Cela se traduit par le fait qu'elles n'absorbent pas les liquides, tels que l'eau présente dans la composition adhésive selon l'invention.

Les charges allégées sont préférentiellement des microsphères creuses. Les microsphères creuses comprennent de préférence un gaz inerte ou un mélange de gaz inerte tel que de l'air ou l'isobutane, à une pression de gaz allant de 0,3.10⁵ à 7.10⁵ à 23°C. Le gaz est piégé lors du procédé de fabrication des microsphères creuses.

Les microsphères creuses peuvent posséder une cavité interne unique (microsphères creuses monocellulaires) ou alternativement plusieurs cavités internes (microsphères creuses polycellulaires telles que la perlite). Les microsphères creuses présentent préférentiellement une paroi externe, délimitant l'intérieur de la cavité interne et la surface externe de la microsphère creuse, d'épaisseur sensiblement homogène et suffisante pour résister aux chocs liés à la manipulation de ces composés lors de la préparation de la composition adhésive, et assurer l'étanchéité au gaz contenu dans la microsphère.

Les charges allégées, en particulier les microsphères creuses, peuvent présenter une taille moyenne de particule (D50) de 1 à 100 µm ; préférentiellement de 25 à 70 µm.

Dans un mode de réalisation particulier, les charges allégées sont des microsphères creuses, non-poreuses, dispersibles dans l'eau, et ayant une taille moyenne de particule (D50) de 1 à 100 µm ; préférentiellement de 25 à 70 µm.

Les microsphères creuses peuvent être préparées par des procédés de fabrication bien connus. Par exemple, les microsphères creuses de polymère peuvent notamment être préparées par un procédé tel que décrit dans la demande US 3,615,972.

La première charge allégée a une masse volumique apparente inférieure ou égale à 0,1 g/cm³ ; préférentiellement de 0,01 à 0.1 g/cm³ ; très préférentiellement de 0,01 à 0,07 g/cm³. Par exemple, la première charge allégée peut avoir une masse volumique apparente de 0,01 à 0.02 g/cm³ ; ou de 0,02 à 0,03 g/cm³ ; ou de 0,03 à 0,04 g/cm³ ; ou de 0,04 à 0,05 g/cm³ ; ou de 0,05 à 0,06 g/cm³ ; ou de 0,06 à 0,07 g/cm³ ; ou de 0,07 à 0,08 g/cm³ ; ou de 0,08 à 0,09 g/cm³ ; ou de 0,09 à 0,1 g/cm³.

La première charge allégée peut être des microsphères creuses ayant une masse volumique apparente de 0,1 g/cm³ ; préférentiellement de 0,01 à 0.1 g/cm³ ; très préférentiellement de 0,01 à 0,07 g/cm³. Ces microsphères creuses peuvent être obtenues à partir d'un matériau thermoplastique ; préférentiellement à partir de polymères dérivés d'hydrocarbures éthyléniques (par exemple le polyéthylène, le polystyrène, le chlorure de vinyle ou leurs mélanges). Ces microsphères creuses peuvent être préparées sous la forme d'une dispersion aqueuse.

La première charge allégée peut être incorporée sous la forme d'une dispersion aqueuse. La formulation sous forme de dispersion aqueuse permet de faciliter la maniabilité de ces charges.

Par exemple, des microsphères creuses obtenues à partir d'un matériau thermoplastique sont disponibles commercialement sous la dénomination Expancel^{®} par Nouryon sous forme de dispersions aqueuses (15 % en poids de microsphères creuses, masse volumique apparente [matière sèche] de 0,036 g/cm³).

Lorsque la première charge allégée est sous la forme d'une dispersion aqueuse, par exemple une dispersion comprenant 15 % en poids de charges (matière sèche) par rapport au poids total de la dispersion, la composition adhésive peut comprendre de 0,5 à 10 %, préférentiellement de 1 à 8 %, très préférentiellement de 1 à 5 %, en poids d'une dispersion aqueuse de charges allégées ayant une masse volumique apparente inférieure ou égale à 0,1 g/cm³, par rapport au poids total de la composition adhésive.

La deuxième charge allégée, si présente, a une masse volumique apparente supérieure à 0,1 et inférieure ou égale à 0,95 g/cm³ ; préférentiellement de 0,15 à 0,70 g/cm³ ; très préférentiellement de 0,20 à 0,50 g/cm³. Par exemple, la masse volumique apparente de la deuxième charge légère peut être supérieure à 0,1 et inférieure ou égale à 0,2 g/cm³ ; ou de 0,2 à 0,3 g/cm³ ; ou de 0,3 à 0,4 g/cm³ ; ou 0,4 à 0,5 g/cm³ ; ou de 0,5 à 0,6 g/cm³ ; ou de 0,6 à 0,7 g/cm³ ; ou de 0,7 à 0,8 g/cm³ ; ou de 0,8 à 0,9 g/cm³ ; ou de 0,9 à 0,95 g/cm³.

La deuxième charge allégée, si présente, peut être choisie parmi la perlite expansée, la vermiculite expansée, les aérogels de silice, le polystyrène expansé, les cénosphères (fillites), les billes creuses d'alumine, les argiles expansées, les ponces, les billes de verre creuses ou les granulés de verre expansés, les grains de mousse de silicate, la rhyolithe ou leurs mélanges ; préférentiellement parmi les perlites expansées, les billes de verre creuses ou leurs mélanges ; très préférentiellement parmi les billes de verres creuses.

La deuxième charge allégée, si présente, peut être choisie parmi les microsphères creuses ayant une masse volumique apparente supérieure à 0,1 et inférieure ou égale à 0,95 g/cm³ ; préférentiellement de 0,15 à 0,70 g/cm³ ; très préférentiellement de 0,20 à 0,50 g/cm³.

Les microsphères creuses peuvent être des microsphères creuses expansibles, des microsphères creuses non-expansibles ou leurs mélanges. Ces microsphères creuses peuvent être obtenues à partir de verre de silice ; préférentiellement ces microsphères creuses peuvent comprendre de l'oxide de silicium, de l'oxide d'aluminium, de l'oxide de potassium, de l'oxide de sodium ou leurs mélanges.

Par exemple, des microsphères creuses obtenues à partir de verre de silice sont disponibles commercialement sous la dénomination Sil Cell^{®} par Silbrico.

La composition adhésive comprend préférentiellement de 0,075 à 6,5 % ; très préférentiellement de 0,15 à 5,2 % ; plus préférentiellement de 0,15 à 3,75 % en poids de matière sèche de charges allégées totales par rapport au poids total de la composition. Par « charges allégées totales », on entend les charges allégées ayant une masse volumique apparente inférieure ou égale à 0,1 g/cm³ et, si présentes, les deuxièmes charges allégées.

Quand la composition adhésive comprend une deuxième charge allégée, cette composition peut comprendre un ratio massique en matière sèche entre la première charge allégée et les charges allégées totales (premières et deuxième charges allégées) de 5 : 100 à 40 : 100, préférentiellement de 5 : 100 à 30 : 100. Par exemple, la composition adhésive peut comprendre un ratio entre la première charge allégée et les charges allégées totales de 5 : 100 à 10 : 100 ; ou de 10 : 100 à 15 : 100 ; ou de 15 : 100 à 20 : 100 ; ou de 20 : 100 à 25 : 100; ou de 25 : 100 à 30 : 100; ou de 30 : 100 à 35 : 100 ; ou de 35 : 100à 40 : 100..

### Résine tackifiante

La composition adhésive selon l'invention comprend également de 6 à 30 % en poids d'au moins une résine tackifiante par rapport au poids total de la composition adhésive. La résine tackifiante permet d'améliorer le caractère piégeant de la colle. Cela permet de mieux maintenir les matériaux ensemble dès leur assemblage pour qu'ils ne glissent pas et ne se déplacent pas l'un par rapport à l'autre. Ainsi, le film de colle reste continu et immobile pendant la durée de prise et le collage ne s'ouvre pas.

La résine peut être choisie parmi :
- les résines obtenues par polymérisation d'hydrocarbures terpéniques et de phénols, en présence de catalyseurs de Friedel-Crafts (telles que la résine Dertophene^{®} 1510 disponible auprès de la société DRT possédant une masse molaire d'environ 870 Da, Dertophene^{®} H150 disponible auprès de la même société de masse molaire égale à environ 630 Da, Sylvarez^{®} TP 95 disponible auprès de la société Arizona Chemical ayant une masse molaire d'environ 1200 Da) ;
- les résines obtenues par polymérisation d'alpha-méthyl styrène telles que la résine Norsolene^{®} W100 disponible auprès de la société Cray Valley, qui est obtenue par polymérisation d'alpha-méthyl styrène sans action de phénols, avec une masse molaire en nombre de 900 Da, Sylvarez^{®} 510 qui est également disponible auprès de la société Arizona Chemical avec une masse molaire d'environ 1740 Da, dont le procédé d'obtention comprend également l'ajout de phénols) ;
- les colophanes d'origine naturelle ou modifiées, et leurs dérivés hydrogénés, dimérisés, polymérisés ou estérifiés par des monoalcools ou des polyols (telles que la résine Sylvalite^{®} RE 100 qui est un ester de collophane et de pentaeréthritol disponible auprès de la société Arizona Chemical et de masse molaire environ 1700 Da) ;
- les résines obtenues par hydrogénation, polymérisation ou copolymérisation de mélanges d'hydrocarbures aliphatiques insaturés ayant environ 5, 9 ou 10 atomes de carbone issus de coupes pétrolières ;
- les résines terpéniques ;
- les copolymères à base de terpènes naturels ; et
- les résines acryliques ayant une viscosité à 100°C inférieure à 100 Pa.s. Dans un mode de réalisation particulier, la résine est choisie parmi les colophanes d'origine naturelle ou modifiées, et leurs dérivés hydrogénés, dimérisés, polymérisés ou estérifiés par des monoalcools ou des polyols (telles que la résine Sylvalite^{®} RE 100 qui est un ester de collophane et de pentaeréthritol disponible auprès de la société Arizona Chemical et de masse molaire environ 1700 Da).

La composition adhésive comprend préférentiellement de 6 à 30 % ; très préférentiellement de 8 à 20 % ; plus préférentiellement de 10 à 14% en poids de résine tackifiante par rapport au poids totale de la composition. Par exemple, cette teneur peut être de 6 à 8 % ; ou de 8 à 10 % ; ou de 10 à 14 % ; ou de 14 à 20 % ; ou de 20 à 25 % ; ou de 25 à 30 % en poids de résine tackifiante par rapport au poids total de la composition adhésive.

### Charge carbonatée

La composition adhésive selon l'invention comprend également de 15 à 60 % en poids d'une charge carbonatée par rapport au poids total de la composition adhésive. L'incorporation de charges carbonatées est avantageuse en qu'elles présentent une absorption d'huile faible (environ 12 g/100 g), ce qui évite les problèmes de stabilité de la composition adhésive. La charge carbonatée se distingue notamment des charges allégées décrites ci-dessus en ce qu'elle a masse volumique apparente supérieure à 0,95 g/cm³ ; préférentiellement de 1,1 à 1,9 g/cm³ ; très préférentiellement de 1,3 à 1,7 g/cm³.

La charge carbonatée peut être choisie parmi les carbonates de métaux alcalins ou alcalino-terreux ; préférentiellement parmi le carbonate de calcium et le carbonate de magnésium ; très préférentiellement le carbonate de calcium.

La composition adhésive comprend préférentiellement de 25 à 50 % ; très préférentiellement de 35 à 45 %, en poids de charge carbonatée par rapport au poids total de la composition. Par exemple, la composition adhésive peut comprendre de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % en poids de charge carbonatée par rapport au poids total de la composition adhésive.

La taille moyenne de particules de charge carbonatée peut être de 1 à 100 µm ; préférentiellement de 1 à 50 µm ; très préférentiellement de 3 à 20 µm.

La composition adhésive est préférentiellement dépourvue d'autres charges que les charges carbonatées et les charges allégées décrites ci-dessus. Dans un mode de réalisation particulier, la composition adhésive est dépourvue de charges ayant une masse volumique apparente supérieure à 0,95 g/cm³ autres que les charges carbonatées. La composition adhésive est préférentiellement dépourvue de charges ayant une masse volumique apparente supérieure à 0,95 g/cm³ choisies parmi le sable, l'alumine, l'alumine hydratée, le silicate de magnésium, le silicate d'aluminium, le silicate de sodium, le silicate de potassium, le mica, la silice et leurs mélanges.

La composition adhésive peut comprendre un ratio massique entre les charges allégées et les charges totales (y inclues les charges allégées et les charges carbonatées) de 1 : 100 à 15 : 100 ; préférentiellement de 1 : 100 à 10 : 100.

### Eau

La composition adhésive peut comprendre en outre de l'eau. L'eau peut être apportée par la composition polymérique, par tout autre dispersion aqueuse (par exemple la dispersion aqueuse de la charge allégée ayant une masse volumique apparente inférieure ou égale à 0,1 g/cm³) ou par ajout d'eau éventuel. L'ajout d'eau peut permettre d'obtenir la concentration souhaitée en matières actives.

La composition peut comprendre de 15 à 40 % ; préférentiellement de 20 à 35 % ; très préférentiellement de 20 à 30 % en poids d'eau par rapport au poids total de la composition adhésive. Par exemple, la composition adhésive peut comprendre de 15 à 20 % ; ou de 20 à 25 % ; ou de 25 à 30 % ; ou de 30 à 35 % ; ou de 35 à 40 % en poids d'eau par rapport au poids total de la composition adhésive.

### Agent épaississant

La composition adhésive selon l'invention peut comprendre en outre au moins un agent épaississant. L'épaississant peut permettre notamment de maintenir les charges en suspension.

L'agent épaississant peut être choisi parmi les épaississants associants ou associatifs ou leurs mélanges.

La composition adhésive peut comprendre de 0,1 à 1 % ; préférentiellement de 0,1 à 0,5 % en poids de l'agent épaississant par rapport au poids total de la composition adhésive.

Lorsque la composition comprend un agent épaississant, celle-ci peut comprendre en outre une base. La base peut améliorer l'efficacité de l'épaississant. Par exemple, la base peut être la triéthanolamine.

La composition adhésive selon l'invention peut comprendre de 0,2 à 2 % ; préférentiellement de 0,5 à 1,5 % en poids de base par rapport au poids de l'agent épaississant.

### Plastifiant

La composition adhésive selon l'invention peut comprendre en outre un plastifiant.

A titre d'exemple d'agent plastifiant utilisable, on peut citer n'importe quel agent plastifiant habituellement utilisé dans le domaine des adhésifs, des mastics et/ou des revêtements de surface, tel que par exemples les phtalates, les benzoates, les esters de trimethylolpropane, les esters de triméthyloléthane, les esters de triméthylolméthane, les esters de glycérol, les esters de pentaerythritol, les huiles minérales napthéniques, les adipates, les cyclohexyldicarboxylates, les huiles paraffiniques, les huiles naturelles (éventuellement époxydées), les polypropylènes, les polybutylènes, les polyisoprènes hydrogénés, et leurs mélanges.

Parmi les phtalates, on peut par exemple citer le diisononyl phtalate, le diisobutyl phtalate, le dioctyle phtalate, le dicyclohexyl phtalate, le diisooctyle phtalate, le diisododécyle phtalate, le dibenzyle phtalate, le diisodécy phtalate (par exemple commercialisé par BASF sous la dénomination PALATINOL TM DIDP), ou le butylbenzyle phtalate.

Parmi les benzoates, on peut par exemple citer : le néopentylglycol dibenzoate (par exemple disponible sous la dénomination UNIPLEX ^{®} 512 auprès de LANXESS), le dipropylèneglycol dibenzoate (par exemple disponible sous la dénomination BENZOFLEX ^{®} 9-88SG auprès de EASTMAN), un mélange de diéthylène glycol dibenzoate et de dipropylène glycol dibenzoate (par exemple disponible sous la dénomination K-FLEX ^{®} 850 S auprès de KALAMA CHEMICAL), ou encore un mélange de diéthylène glycol dibenzoate, de dipropylène glycol dibenzoate et de triéthylène glycol dibenzoate (par exemple disponible sous la dénomination BENZOFLEX ^{®} 2088 auprès de EASTMAN).

Parmi les esters de pentaérythritol, on peut par exemple citer le tétravalérate de pentaérythritol (par exemple disponible sous la dénomination PEVALENTM auprès de la société PERSTORP).

Parmi les cyclohexanedicarboxylates, on peut par exemple citer le diisononyl 1,2-cyclohexanedicarboxylate (par exemple disponible sous la dénomination HEXAMOLL DINCH ^{®} auprès de BASF).

D'autres plastifiants peuvent être le triéthylèneglycol-2-éthylhexanoate) (Oxsoft 3G8) et le acetate de butyl di glycol (ABDG).

La composition adhésive peut comprendre de 0,1 à 10 % ; préférentiellement de 0,5 à 5 % en poids de plastifiant par rapport au poids total de la composition.

### Additifs

La composition adhésive selon l'invention peut comprendre en outre au moins un additif ; préférentiellement un additif choisi parmi les solvants, les pigments, les absorbeurs d'humidité, les stabilisants UV (ou antioxydants), les agents dispersants, les tamis moléculaires, les agents anti-mousse, les matériaux fluorescents, les biocides, un polymère additionnel autre que les polymères décrits ci-dessus et leurs mélanges.

La composition peut comprendre de 0,01 à 10 % en poids d'additifs par rapport au poids total de la composition.

Le solvant peut être un solvant volatil à température à 23°C ; très préférentiellement un solvant alcoolique volatile à 23°C ; plus préférentiellement un solvant choisi parmi l'éthanol, l'isopropanol ou leurs mélanges. Le solvant volatile permet notamment de diminuer la viscosité de la composition adhésive et d'en faciliter l'application. Le caractère volatil du solvant permet notamment aux sillons de colle, obtenu après durcissement de la composition adhésive, de ne plus contenir de solvant. Ainsi, le solvant n'a par exemple pas d'influence négative sur la dureté du joint.

Les pigments peuvent être des pigments organiques ou inorganiques. Par exemple, le pigment est du dioxide de titane (TiO₂), en particulier le KRONOS^{®} 2059 commercialisé par la société KRONOS.

L'absorbeur d'humidité peut être choisi parmi les dérivés alkoxysilane hydrolysables, non polymériques, de masse moléculaire inférieure à 500 g/mol ; préférentiellement parmi les dérivés de triméthoxysilane et de triéthoxysilane. Un tel agent peut typiquement prolonger la durée de conservation de la composition durant le stockage et le transport avant son utilisation. On peut par exemple citer le gamma-métacryloxypropyltriméthoxysilane (par exemple disponible sous la dénomination commerciale SILQUEST ^{®} A-174 auprès de la société MOMENTIVE), le méthacryloxyméthyltriméthoxysilane (par exemple disponible sous la dénomination GENIOSIL ^{®} XL33 auprès de WACKER), le vinyltriméthoxysilane, l'isooctyltriméthoxysilane, ou le phényltriméthoxysilane. Les stabilisants UV (ou antioxydants) sont typiquement introduits pour protéger la composition d'une dégradation résultant d'une réaction avec de l'oxygène qui est susceptible de se former par action de la chaleur ou de la lumière. Ces composés peuvent inclure des antioxydants primaires qui piègent les radicaux libres. Les antioxydants primaires peuvent être utilisés seuls ou en combinaison avec d'autres antioxydants secondaires ou des stabilisants UV. On peut par exemple citer l'IRGANOX ^{®} 1010, l'IRGANOX ^{®} B561, l'IRGANOX ^{®} 245, l'IRGAFOS ^{®} 168, TINUVIN^{®} 328 ou TINUVINTM 770 commercialisés par BASF.

Le polymère additionnel peut être un copolymère comprenant au moins un monomère (méth)acrylate ou (méth)acrylique et au moins un monomère styrène, et ayant une température de transition vitreuse (Tg) de 0 à 40°C ; préferentiellement de 10 à 30°C.

### Masse volumique apparente

La masse volumique apparente des charges et de la composition est décrite ci-dessus. La masse volumique apparente est définie par le rapport entre la masse du matériau et le volume apparent de l'ensemble des grains. La masse volumique apparente est exprimée en g/cm³.

La masse volumique est mesurée à partir de charges/composition sous forme de poudre. Les charges sous forme de poudre sont des extraits secs. Par « extrait sec », on entend un matériau comprenant une humidité résiduelle de substantiellement 0%.

La masse volumique apparente peut être mesurée selon le mode opératoire suivant :
- on place un godet d'une contenance d'environ V = 500 mL calibré (masse du godet Mo = 500 g) en position droite au-dessous d'un entonnoir en acier inoxydable d'une contenance d'environ 600 mL ;
- on ferme le fond creux de l'entonnoir avec une glissière, la glissière permettant d'assurer l'ouverture et la fermeture du fond creux de l'entonnoir ;
- on remplit complètement l'entonnoir avec la ou les charges, homogénéisées, et on enlève rapidement la glissière, laissant ainsi s'écouler la ou les charges dans le godet ;
- on arase lentement les charges superflues à l'aide d'une règle plate (un instrument équivalent peut convenir), et on nettoie soigneusement l'extérieur du godet avec un chiffon sec (un pinceau pouvant être utilisé) ; et
- on pose le godet sur une balance analytique au 0.1 g et on pèse le godet et son contenu, masse M1, avec une précision au 0.1 g.

Dans un mode de réalisation particulier, la composition adhésive comprend une charge allégée ayant une densité apparente de 0,01 à 0,1 g/cm³, optionnellement une deuxième charge allégée ayant une densité apparente de 0,15 à 0,70 g/cm³, et une charge carbonatée ayant une densité apparente de 1,1 à 1,9 g/cm³.

Dans un mode de réalisation très particulier, la composition adhésive comprend une charge allégée ayant une densité apparente de 0,01 à 0,07 g/cm³, optionnellement une deuxième charge allégée ayant une densité apparente de 0,20 à 0,50 g/cm³, et une charge carbonatée ayant une densité apparente de 1,3 à 1,7 g/cm³ ».

La composition adhésive selon l'invention a préférentiellement une masse volumique apparente (matière sèche) de 0,7 à 1,1 g/cm³ ; préférentiellement de 0,8 à 1,1 g/cm³ ; très préférentiellement de 0,9 à 1,1 g/cm³. Par exemple, la masse volumique apparente de la composition adhésive peut être de 0,7 à 0,8 g/cm³ ; ou de 0,8 à 0,9 g/cm³ ; ou 0,9 à 1,0 g/cm³ ; ou de 0,9 à 1,1 g/cm³.

### Viscosité

La composition adhésive selon l'invention peut avoir une viscosité de 10 000 mPa.s à 45 000 mP.s ; préférentiellement de 20 000 à 35 000 MPa.s. Cette viscosité est mesurée en utilisant un viscosimètre de type Brookfield en utilisant un mobile n°6 à une vitesse de 20 tours/min à température ambiante (environ 20 °C) et à pression atmosphérique. Par exemple, la viscosité de la composition adhésive peut être de 10 000 mPa.s à 15 000 mP.s ; ou de 15 000 mPa.s à 20 000 mP.s ; ou de 20 000 mPa.s à 25 000 mP.s ; ou de 25 000 mPa.s à 30 000 mP.s ; ou de 30 000 mPa.s à 35 000 mP.s ; ou de 35 000 mPa.s à 40 000 mP.s ; ou de 40 000 mPa.s à 45 000 mP.s ;.

### Composition adhésive mono-composante ou bi-composante

La composition adhésive selon l'invention peut être une composition mono-composante, c'est-à-dire une composition adhésive selon laquelle tous les composés sont conditionnés dans un même compartiment. Dans ce cas, la composition est de préférence prête à l'emploi et l'utilisateur (particulier ou professionnel) peut l'appliquer directement sur le substrat à recouvrir et/ou le revêtement de surface souple à poser, sans avoir à effectuer de mélange préalable.

Alternativement, la composition adhésive peut être une composition bi-composante, c'est-à-dire une composition adhésive selon laquelle les composants sont conditionnés dans au moins deux compartiments distincts. Dans ce cas, la composition bi-composante peut comprendre un composant A et un composant B, les deux composants étant mélangés avant l'utilisation et l'application de la composition adhésive sur un substrat et/ou un revêtement de surface souple par exemple. Les matériaux décrits ci-dessus peuvent être repartis dans le composant A et/ou dans le composant B de la composition bi-composante. Le composant A peut par exemple comprendre la composition polymérique, les charges légères et les charges carbonatées. Le composant B peut comprendre la résine tackifiante ainsi que les additifs optionnels.

### Procédé d'application d'un revêtement de surface

Dans un deuxième aspect, la présente invention concerne un procédé d'application d'un revêtement de surface souple sur un substrat, ce procédé comprenant les étapes suivantes :
- application d'une couche de la composition adhésive telle que décrite ci-dessus sur le substrat et/ou le revêtement de surface souple ; et
- application du revêtement de surface souple sur le substrat.

La composition adhésive selon l'invention est avantageuse en ce qu'elle permet une adhésion satisfaisante avec un taux d'application inférieur d'au moins 10 % ; préférentiellement d'au moins 15 % ; par rapport à une composition adhésive standard appliquée généralement en une quantité d'environ 300 g/m², sans compromettre le temps de gommage, le temps ouvert et la performance de pelage.

Le temps de gommage est le laps de temps incompressible entre l'application de la composition adhésive sur le substrat et l'application du revêtement de surface souple sur la couche adhésive. Le temps de gommage est préférentiellement de 30 min ou moins à température ambiante (20°C) et 50 % d'humidité.

Par « temps ouvert », on entend le laps de temps pendant lequel il y a un transfert de colle entre la couche adhésive et le revêtement de surface souple. Le temps ouvert est préférentiellement de 40 à 50 min à température ambiante (20°C) et 50 % d'humidité.

Dans un mode de réalisation particulier, il est appliqué une quantité de composition adhésive inférieure ou égale à 290 g/m² ; préférentiellement inférieure ou égale à 280 g/m² ; très préférentiellement inférieure ou égale à 270 g/m². Par exemple, une application efficace de composition adhésive peut être obtenue en utilisant une spatule de type 1A2 du référentiel TKB.

La couche de composition adhésive peut être appliquée de manière continue ou discontinue sur le substrat et/ou le revêtement de surface souple.

La couche de composition adhésive est appliquée préférentiellement sur le substrat. Le substrat n'est en général pas primarisé avant application de la couche de composition adhésive. Par exemple un carrelage subit un simple décapage avant application de la couche de composition adhésive. Les substrats sont ceux cités dans la norme DTU 53.1.

La composition peut être appliquée à une température allant de 5°C à 40°C et préférentiellement entre 15°C et 30°C.

### Revêtements de surface souple

Le revêtement de surface souple peut être posé après l'observation d'un temps de gommage de 30 min ou moins, par exemple de 10 à 30 min, selon les conditions environnementales. Le temps de gommage correspond à la période pendant laquelle la composition de colle appliquée s'épaissit et augmente son pouvoir d'adhérence.

Les revêtements de surface souples utilisés dans l'invention sont ceux qui remplissent les conditions édictées dans les normes DTU 53.1 et 53.2.

Les revêtements de surface souples peuvent être choisis parmi les moquettes tricotées, touffetées, tissées et floquées, en lés ou en dalles, notamment celles qui répondent aux exigences de la NF EN 1307, ainsi que les revêtements de sol aiguilletés en lés ou en dalles, notamment ceux qui répondent aux exigences de la NF EN 1470 et prEN 13297. On peut citer les moquettes classiques en laine ou en synthétique, et les revêtements en fibres naturelles.

Les revêtements de surface souples peuvent aussi être des revêtements de sol en polymère, par exemple polychlorure de vinyle (PVC) ou autre. On peut citer les exemples suivants (voir la norme DTU 53.2) : les revêtements de sol homogènes et hétérogènes à base de polychlorure de vinyle ; les revêtements de sol à base de polychlorure de vinyle sur support de jute ou de polyester ou sur support de polyester avec envers en polychlorure de vinyle ; les revêtements de sol à base de polychlorure de vinyle sur mousse ; les revêtements de sol à base de polychlorure de vinyle avec support à base de liège ; les revêtements de sol à base de polychlorure de vinyle expansé ; les dalles semi flexibles à base de polychlorure de vinyle ; les dalles d'aggloméré de liège avec couche d'usure à base de polychlorure de vinyle ; ou les les revêtements souples à base de polymères d'origine renouvelable (d'origine agricole notamment) tels que les polymères PLA (acide polylactique) ou polyoléfine (l'oléfine étant issue notamment de bio-éthanol). On peut donc utiliser dans l'invention un grand nombre de revêtements différents, par exemples les revêtements suivants : les PVC homogènes (dalles ou lés) ; les PVC multicouches (dalles ou lés) ; les PVC sur liège ; les polyoléfines ; les linoléums en lés ; les caoutchoucs en dalles ou en lés ; les vinyles Expansés Reliefs (V.E.R.) ; les dalles semi-flexibles ; les aiguilletés avec ou sans envers ; les moquettes sur mousse (latex) ; les moquettes à envers non tissés ; les moquettes dossiers synthétiques (type Action Back) ; ou les coco, sisal et jonc de mer à envers latexés. Afin d'appliquer le revêtement dans les meilleures conditions et afin d'éviter les désordres, il est recommandé de se rapporter aux guides de pose des fabricants des différentes factures de revêtements.

### Substrat à recouvrir

Le substrat à recouvrir, en particulier le sol, peut correspondre à tout substrat traditionnel susceptible d'être recouvert par un revêtement de surface souple, et comprendre notamment les matériaux choisis parmi le béton, le mortier, la brique, le verre, le, métal, le bois, le plastique ou leurs combinaisons. On peut citer par exemple les bétons surfacés (notamment avec un parement soigné), les chapes base ciment (incorporées ou rapportées), les chapes anhydrite, les anciens carrelages, anciens parquets convenablement lissés, les panneaux de particules ou les contreplaqués, les parements de murs classiques. La préparation des supports et les conditions de mise en oeuvre doivent être réalisées conformément aux règles professionnelles dans les pays en vigueur.

### Procédé de fabrication de la composition adhésive

Dans un troisième aspect, la présente invention concerne un procédé de fabrication de la composition adhésive par simple mélange des matériaux, à savoir la composition polymérique, les charges allégées, les charges carbonatées et la résine tackifiante et tous matériaux additionnels.

La composition adhésive peut être fabriquée par prémélange de la composition polymérique, des charges carbonatées, de la résine tackifiante et de tous matériaux additionnels, puis l'ajout des charges allégées au prémélange obtenu.

Après fabrication, la composition adhésive est stockée à l'abri de la lumière et de l'air à une température de 5 à 40°C ; préférentiellement de 10 à 30°C.

### Association (kit) d'un revêtement de surface souple et d'une composition adhésive

Dans un quatrième aspect, la présente invention concerne l'association d'un revêtement de surface souple tel que décrit ci-dessus avec la composition adhésive telle que décrite ci-dessus. En effet, il peut être judicieux d'associer au sein d'un kit destinés aux utilisateurs (professionnels ou particuliers) un revêtement de surface souple et une composition adhésive en quantités adaptées à la surface à revêtir.

### Utilisation de la composition adhésive

Dans un cinquième aspect, la présente invention concerne l'utilisation de la composition adhésive pour appliquer un revêtement de surface souple sur un substrat tels que décrits ci-dessus ; préférentiellement pour appliquer sur un sol un revêtement de surface souple choisi parmi les revêtements en polymère ou les moquettes.

Les revêtements de surface souples utilisés dans l'invention sont ceux qui remplissent les conditions édictées dans les normes DTU 53.1 et 53.2.

Les revêtements de surface souples peuvent être choisis parmi les moquettes tricotées, touffetées, tissées et floquées, en lés ou en dalles, notamment celles qui répondent aux exigences de la NF EN 1307, ainsi que les revêtements de sol aiguilletés en lés ou en dalles, notamment ceux qui répondent aux exigences de la NF EN 1470 et prEN 13297. On peut citer les moquettes classiques en laine ou en synthétique, et les revêtements en fibres naturelles.

### Exemples

Les exemples suivants illustrent l'invention sans la limiter.

Dans un premier temps, cinq compositions (A à E) ont été préparées avec les matériaux suivants:
- Composition polymérique 1 : Dispersion acrylique (60% matière sèche) d'un copolymère d'ester acrylique ayant une température de transition vitreuse de -22°C ;
- Composition polymérique 2 : Dispersion acrylique (50% matière sèche) d'un copolymère d'ester acrylique ayant une température de transition vitreuse de -22°C ;
- Polymère additionnel : Dispersion aqueuse d'un copolymère styrène-acrylique ayant une température de transition vitreuse de 20 °C et d'extrait sec d'environ 50 % ;
- Résines tackifiantes : résines de colophane
- 1^{ère} charges allégées : Dispersion aqueuse (15 % matière sèche) de microsphères thermoplastiques Expancel^{®} de Nouryon avec une masse volumique apparente (matière sèche) d'environ 0,036 g/m³ et un D50 de 35 µm;
- 2^{ème} charges allégées : Microsphères de silicate d'alumine Sil Cell^{®} de Silbrico avec une masse volumique apparente (matière sèche) d'environ 0,15 g/m³ et un D50 de 40 µm ;
- Charge carbonatée 1 : Carbonate avec un D50 de 14 µm ;
- Charge carbonatée 2 : Carbonate avec un D50 de 5 µm.

La composition A (référence) et les compositions B à E (invention) ont les formulations suivantes :

| Formulations (matériaux en % massique) | A | B | C | D | E |
|---|---|---|---|---|---|
| Comp. polymérique 1 | 9,50 | 9,50 | 9,50 | 9,50 | 9,50 |
| Comp. polymérique 2 | 8,00 | 8,00 | 8,00 | 8,00 | 8,00 |
| Polymère additionnel | 3,00 | 3,00 | 3,50 | 3,50 | 3,50 |
| Résines tackifiantes | 12,00 | 12,00 | 12,00 | 12,00 | 12,00 |
| Charge carbonatée 1 | 26,00 | 24,00 | 23,00 | 23 | 23 |
| Charge carbonatée 2 | 14,00 | 13,00 | 11,00 | 12 | 12 |
| 1^{ère} charge allégée (15%) | - | 3,00 (0,45) | 1,50 (0,225) | 1,50 (0,225) | 2,00 (0,30) |
| 2^{ème} charge allégée | - | - | 2,00 | 2,50 | 1,00 |
| Plastifiants | 3.15 | 3.15 | 3.15 | 2.15 | 2.15 |
| Agent épaississant | 0,60 | 0,60 | 0,70 | 0,70 | 0,80 |
| Agent anti-mousse | 0,20 | 0,20 | 0,20 | 0,20 | 0,00 |
| Dispersant de charge | 0,40 | 0,40 | 0,50 | 0,40 | 0,40 |
| Base | 0,80 | 0,80 | 0,90 | 0,90 | 1,00 |
| Agent mouillant | 0,40 | 0,40 | 0,40 | 0,40 | 0,40 |
| Stabilisant | - | - | - | 0,30 | 0,30 |
| Emulsifiant | - | - | - | - | 0,50 |
| Biocides | 0,10 | 0,10 | 0,10 | 0,10 | 0,10 |
| Eau | Qsp | qsp | qsp | qsp | qsp |

| Paramètres | | | | | |
|---|---|---|---|---|---|
| Masse volumique apparente | 1,4 | 1,06 | 1,04 | 0,97 | 0,95 |
| Viscosité (mPa.s en 6V20) | 38 000 | 35 000 | 37 000 | 33 000 | 31 000 |
| Stabilité | Oui | Oui | Oui | Oui | Oui |
| Consommation (g/m²) | 300 | 240 | 220 | 222 | 212 |
| Temps de gommage (min) | 20 | 10 | 20 | 20 | 20 |
| Temps ouvert (min) | 50 | 40 | 60 | 50 | 60 |
| Piégeant | 3 | 3 | 3 | 3 | 3 |
| Pelage (N/mm) | 1,5 | 1,62 | 1,46 | 1,45 | 1,65 |

Les compositions A à E ont été appliquées à l'aide d'une spatule crantée type 1A2 sur un support plaque cartonné de dimension 1200 mm x 800 mm et revêtu d'un ragréage. Les conditions lors de l'application des compositions étaient de température (23±3)°C et d'humidité relative (50±10)%. A la fin de l'application de chaque composition, le chronomètre a été déclenché.

Les compositions B à E présentent un rendement d'application amélioré par rapport à la composition A, en particulier avec une réduction de la consommation (g/m²) d'au moins 10 %. Outre les performances relatives à l'adhésion et au rendement d'application, les compositions B à E présentent également une bonne facilité d'application, en particulier D et E. En outre, ces compositions conservent des caractéristiques d'application et de performance satisfaisantes.

## Revendications

1. Composition adhésive, pour l'application d'un revêtement de surface souple sur un substrat, comprenant, par rapport au poids total de la composition adhésive :
- de 10 à 40 % en poids de matière sèche d'une composition polymérique comprenant au moins un copolymère ou un mélange d'au moins deux polymères comprenant au moins un monomère (méth)acrylate ou (méth)acrylique ;
- de 0,075 à 1,5 %, préférentiellement de 0,15 à 1,2 %, très préférentiellement de 0,15 à 0,75 %, en poids de matière sèche d'au moins une charge allégée ayant une masse volumique apparente inférieure ou égale à 0,1 g/cm³, préférentiellement de 0,01 à 0.1 g/cm³, très préférentiellement de 0,01 à 0,07 g/cm³ ;
- optionnellement au moins une deuxième charge allégée ayant une masse volumique apparente supérieure à 0,1 g/cm³ et inférieure ou égale à 0,95 g/cm³, préférentiellement de 0,15 à 0,70 g/cm³ ; très préférentiellement de 0,20 à 0,50 g/cm³ ;
- de 15 à 60 % en poids d'au moins une charge carbonatée ; et
- de 6 à 30 % en poids d'au moins une résine tackifiante.

2. Composition adhésive, selon la revendication 1, comprenant de 15 à 35 % ; préférentiellement de 20 à 30 % ; en poids de matière sèche, par rapport au poids total de la composition adhésive, d'une composition polymérique comprenant au moins un copolymère ou un mélange de deux polymères comprenant au moins un monomère (méth)acrylate ou (méth)acrylique.

3. Composition adhésive, selon l'une quelconque des revendications précédentes, selon laquelle la composition polymérique comprend de 35 à 70 % ; préférentiellement de 45 à 65 % ; très préférentiellement de 50 à 63 % ; encore plus préférentiellement de 58 à 62 %, en poids d'un copolymère ou un mélange d'au moins deux polymères comprenant au moins un monomère (méth)acrylate ou (méth)acrylique, par rapport au poids total de la composition polymérique.

4. Composition adhésive, selon l'une quelconque des revendications précédentes, selon laquelle les charges allégées sont des microsphères creuses, non-poreuses, dispersibles dans l'eau, et ayant une taille moyenne de particule (D50) de 1 à 100 µm ; préférentiellement de 25 à 70 µm, ladite taille moyenne de particule (D50) étant déterminée selon la norme NF ISO 13320-1 (1999) par diffraction laser sur un appareil de type MALVERN.

5. Composition adhésive, selon l'une quelconque des revendications précédentes, selon laquelle les charges allégées ayant une masse volumique apparente inférieure ou égale à 0,1 g/cm³ sont des microsphères creuses obtenues à partir d'un matériau thermoplastique ; préférentiellement à partir de polymères dérivés d'hydrocarbures éthyléniques.

6. Composition adhésive, selon l'une quelconque des revendications précédentes, selon laquelle les deuxièmes charges allégées, ayant une masse volumique apparente supérieure à 0,1 g/cm³ et inférieure ou égale à 0,95 g/cm³, sont des microsphères creuses obtenues à partir de verre de silice.

7. Composition adhésive, selon l'une quelconque des revendications précédentes, selon laquelle la résine tackifiante est choisie parmi les colophanes d'origine naturelle ou modifiées, et leurs dérivés hydrogénés, dimérisés, polymérisés ou estérifiés par des monoalcools ou des polyols.

8. Composition adhésive, selon l'une quelconque des revendications précédentes, selon laquelle la charge carbonatée a une masse volumique apparente supérieure à 0,95 g/cm³ ; préférentiellement de 1,1 à 1,9 g/cm³ ; très préférentiellement de 1,3 à 1,7 g/cm³.

9. Composition adhésive, selon l'une quelconque des revendications précédentes, selon laquelle la charge carbonatée est choisie parmi les carbonates de métaux alcalins ou alcalino-terreux ; préférentiellement parmi le carbonate de calcium et le carbonate de magnésium ; très préférentiellement la charge carbonatée est le carbonate de calcium.

10. Composition adhésive, selon l'une quelconque des revendications précédentes, comprenant un ratio massique entre les charges allégées et les charges totales de 1 : 100 à 15 : 100 ; préférentiellement de 1 : 100 à 10 : 100 .

11. Composition adhésive, selon l'une quelconque des revendications précédentes, comprenant en outre un agent épaississant, un plastifiant, un solvant, un pigment, un absorbeur d'humidité, un stabilisant UV, un agent dispersant, un tamis moléculaire, un agent anti-mousse, un matériau fluorescent, un biocide et leurs mélanges.

12. Composition adhésive, selon l'une quelconque des revendications précédentes, ayant une viscosité de 10 000 à 45 000 mP.s ; préférentiellement de 20 000 à 35 000 MPa.s, ladite viscosité étant mesurée en utilisant un viscosimètre Brookfield en utilisant un mobile n°6 à une vitesse de 20 tours/min à température ambiante (environ 20°C) et à pression atmosphérique.

13. Procédé d'application d'un revêtement de surface souple sur un substrat comprenant les étapes suivantes :
- application d'une couche de composition adhésive, selon l'une quelconque des revendications précédentes, sur le substrat et/ou le revêtement de surface souple ; et
- application du revêtement de surface souple sur le substrat.

14. Procédé d'application d'un revêtement de surface souple sur un substrat selon la revendication 13, selon lequel une quantité de composition adhésive inférieure ou égale à 290 g/m², préférentiellement inférieure ou égale à 280 g/m², très préférentiellement inférieure ou égale à 270 g/m², est appliquée.

15. Utilisation de la composition adhésive selon l'une quelconque des revendications 1 à 12, pour appliquer un revêtement de surface souple sur un substrat ; préférentiellement pour appliquer sur un sol un revêtement de surface souple choisi parmi les revêtements en polymère ou les moquettes.

## Patentansprüche

1. Klebstoffzusammensetzung zum Aufbringen eines flexiblen Oberflächenbelags auf einem Substrat, die bezogen auf das Gesamtgewicht der Klebstoffzusammensetzung Folgendes umfasst:
- von 10 bis 40 Gewichts-% der Trockenmasse einer Polymerzusammensetzung, die mindestens ein Copolymer oder eine Mischung aus mindestens zwei Polymeren umfasst, die mindestens ein Methacrylat- oder Methacrylmonomer umfasst;
- von 0,075 bis 1,5 Gewichts-%, bevorzugt von 0,15 bis 1,2 Gewichts-%, sehr bevorzugt von 0,15 bis 0,75 Gewichts-% der Trockenmasse von mindestens einem Leichtfüllstoff, der eine Rohdichte von kleiner gleich 0,1 g/cm³, bevorzugt von 0,01 bis 0,1 g/cm³, sehr bevorzugt von 0,01 bis 0,07 g/cm³ aufweist;
- optional mindestens einen zweiten Leichtfüllstoff, der eine Rohdichte von über 0,1 g/cm³ und kleiner gleich 0,95 g/cm³, bevorzugt von 0,15 bis 0,70 g/cm³ ; sehr bevorzugt von 0,20 bis 0,50 g/cm³ aufweist;
- von 15 bis 70 Gewichts-% von mindestens einem carbonathaltigen Füllstoff; und
- von 6 bis 70 Gewichts-% von mindestens einem Klebrigmacher-Harz.

2. Klebstoffzusammensetzung nach Anspruch 1, die bezogen auf das Gesamtgewicht der Klebstoffzusammensetzung 15 bis Gewichts-35 %; bevorzugt von 20 bis 30 Gewichts-% der Trockenmasse einer Polymerzusammensetzung umfasst, die mindestens ein Copolymer oder eine Mischung aus zwei Polymeren umfasst, die mindestens ein Methacrylat- oder Methacrylmonomer umfasst.

3. Klebstoffzusammensetzung nach einem der vorhergehenden Ansprüche, wobei die Polymerzusammensetzung bezogen auf das Gesamtgewicht der Polymerzusammensetzung 35 bis 70 Gewichts-%; bevorzugt von 45 bis 65 Gewichts-%; sehr bevorzugt von 50 bis 63 Gewichts-%; noch bevorzugter von 58 bis 62 Gewichts-% von einem Copolymer oder eine Mischung aus mindestens zwei Polymeren umfasst, die mindestens ein Methacrylat- oder Methacrylmonomer umfasst.

4. Klebstoffzusammensetzung nach einem der vorhergehenden Ansprüche, wobei die Leichtfüllstoffe in Wasser dispergierbare nicht-poröse Hohlkugeln mit einer mittleren Partikelgröße (D50) von 1 bis 100 pm; bevorzugt von 25 bis 70 µm sind, wobei die mittlere Partikelgröße (D50) nach der Norm NF ISO 13320-1 (1999) mittels Laserbeugung an einem Gerät vom Typ MALVERN bestimmt wird.

5. Klebstoffzusammensetzung nach einem der vorhergehenden Ansprüche, wobei die Leichtfüllstoffe, die eine Rohdichte von kleiner gleich 0,1 g/cm³ aufweisen, Hohlkugeln sind, die aus einem thermoplastischen Werkstoff, vorzugsweise aus Polymeren erhalten werden, die aus ethylenischen Kohlenwasserstoffen abgeleitet sind.

6. Klebstoffzusammensetzung nach einem der vorhergehenden Ansprüche, wobei die Leichtfüllstoffe, die eine Rohdichte von über 0,1 g/cm³ und kleiner gleich 0,95 g/cm³ aufweisen, Hohlkugeln sind, die aus Quarzglas erhalten werden.

7. Klebstoffzusammensetzung nach einem der vorhergehenden Ansprüche, wobei das Klebrigmacher-Harz aus Kolophoniumharzen natürlichen Ursprungs oder modifizierten Kolophoniumharzen und ihren hydrierten, dimerisierten, polymerisierten oder mit einwertigen oder mehrwertigen Alkoholen veresterten Derivaten ausgewählt ist.

8. Klebstoffzusammensetzung nach einem der vorhergehenden Ansprüche, wobei der carbonathaltige Füllstoff eine Rohdichte von über 0,95 g/cm³; bevorzugt von 1,1 bis 1,9 g/cm³, sehr bevorzugt von 1,3 bis 1,7 g/cm³ aufweist.

9. Klebstoffzusammensetzung nach einem der vorhergehenden Ansprüche, wobei der carbonathaltige Füllstoff aus Carbonaten von Alkalimetallen oder Erdalkalimetallen, vorzugsweise aus Calciumcarbonat und Magnesiumcarbonat ausgewählt ist; wobei der carbonathaltige Füllstoff sehr bevorzugt Calciumcarbonat ist.

10. Klebstoffzusammensetzung nach einem der vorhergehenden Ansprüche, die ein Massenverhältnis zwischen den Leichtfüllstoffen und den Gesamtfüllstoffen von 1:100 bis 15:100; bevorzugt von 1:100 bis 10:100 aufweist.

11. Klebstoffzusammensetzung nach einem der vorhergehenden Ansprüche, die ferner einen Verdicker, einen Weichmacher, ein Lösungsmittel, ein Pigment, einen Feuchtigkeitsabsorber, einen UV-Stabilisator, ein Dispergiermittel, ein Molekularsieb, ein Schaumverhinderungsmittel, ein fluoreszierendes Material, ein Biozid und ihre Mischungen umfasst.

12. Klebstoffzusammensetzung nach einem der vorhergehenden Ansprüche, die eine Viskosität von 10.000 bis 45.000 mPa.s; bevorzugt von 20.000 bis 35.000 mPa.s aufweist, wobei die Viskosität unter Verwendung eines Brookfield-Viskosimeters und einer Scheibenspindel Nr. 6 bei einer Drehzahl von 20 Umdrehungen/min bei Umgebungstemperatur (ungefähr 20°C) und Umgebungsluftdruck gemessen wird.

13. Verfahren zum Aufbringen eines flexiblen Oberflächenbelags auf ein Substrat, das folgende Schritte umfasst:
- Aufbringen einer Schicht aus der Klebstoffzusammensetzung nach einem der vorhergehenden Ansprüche auf das Substrat und/oder den flexiblen Oberflächenbelag; und
- Aufbringen des flexiblen Oberflächenbelags auf das Substrat.

14. Verfahren zum Aufbringen eines flexiblen Oberflächenbelags auf ein Substrat nach Anspruch 13, wobei eine Menge der Klebstoffzusammensetzung von kleiner gleich 290 g/m², bevorzugt von kleiner gleich 280 g/m², sehr bevorzugt von kleiner gleich 270 g/m² aufgebracht wird.

15. Verwendung der Klebstoffzusammensetzung nach einem der Ansprüche 1 bis 12 zum Aufbringen eines flexiblen Oberflächenbelags auf ein Substrat; bevorzugt zum Aufbringen eines flexiblen Oberflächenbelags, der aus Polymerbodenbelägen oder Teppichen ausgewählt ist, auf einen Boden.

## Claims

1. Adhesive composition, for applying a flexible surface covering to a substrate, comprising, relative to the total weight of the adhesive composition:
- from 10% to 40% by weight of solids of a polymer composition comprising at least one copolymer or a blend of at least two polymers comprising at least one (meth)acrylate or (meth)acrylic monomer;
- from 0.075% to 1.5%, preferentially from 0.15% to 1.2%, very preferentially from 0.15% to 0.75%, by weight of solids of at least one lightened filler having a bulk density of less than or equal to 0.1 g/cm3, preferentially from 0.01 to 0.1 g/cm3; very preferentially from 0.01 to 0.07 g/cm3;
- optionally at least a second lightened filler having a bulk density of greater than 0.1 g/cm3 and less than or equal to 0.95 g/cm3, preferentially from 0.15 to 0.70 g/cm3; very preferentially from 0.20 to 0.50 g/cm3;
- from 15% to 60% by weight of at least one carbonate filler; and
- from 6% to 30% by weight of at least one tackifying resin.

2. Adhesive composition according to Claim 1, comprising from 15% to 350; preferentially from 20% to 30%; by weight of solids, relative to the total weight of the adhesive composition, of a polymer composition comprising at least one copolymer or a blend of two polymers comprising at least one (meth)acrylate or (meth)acrylic monomer.

3. Adhesive composition according to either of the preceding claims, in which the polymer composition comprises from 35% to 70%; preferentially from 45% to 650; very preferentially from 50% to 630; even more preferentially from 58% to 620, by weight of a copolymer or a blend of at least two polymers comprising at least one (meth)acrylate or (meth)acrylic monomer, relative to the total weight of the polymer composition.

4. Adhesive composition according to any one of the preceding claims, in which the lightened fillers are water-dispersible, non-porous, hollow microspheres with a mean particle size (D50) from 1 to 100 pm; preferentially from 25 to 70 pm, said mean particle size (D50) being determined according to the standard NF ISO 13320-1 (1999) by laser scattering on a Malvern type machine.

5. Adhesive composition according to any one of the preceding claims, in which the lightened fillers having a bulk density of less than or equal to 0.1 g/cm3 are hollow microspheres obtained from a thermoplastic material; preferentially from polymers derived from ethylenic hydrocarbons.

6. Adhesive composition according to any one of the preceding claims, in which the second lightened fillers, having a bulk density of greater than 0.1 g/cm3 and less than or equal to 0.95 g/cm3, are hollow microspheres obtained from silica glass.

7. Adhesive composition according to any one of the preceding claims, in which the tackifying resin is chosen from rosins of natural origin or modified rosins, and derivatives thereof that are hydrogenated, dimerized, polymerized or esterified with monoalcohols or polyols.

8. Adhesive composition according to any one of the preceding claims, in which the carbonate filler has a bulk density of greater than 0.95 g/cm3; preferentially from 1.1 to 1.9 g/cm3; very preferentially from 1.3 to 1.7 g/cm3.

9. Adhesive composition according to any one of the preceding claims, in which the carbonate filler is chosen from alkali metal or alkaline-earth metal carbonates; preferentially from calcium carbonate and magnesium carbonate; very preferentially, the carbonate filler is calcium carbonate.

10. Adhesive composition according to any one of the preceding claims, comprising a mass ratio of the lightened fillers to the total fillers of from 1:100 to 15:100; preferentially from 1:100 to 10:100.

11. Adhesive composition according to any one of the preceding claims, also comprising a thickener, a plasticizer, a solvent, a pigment, a moisture absorber, a UV stabilizer, a dispersant, a molecular sieve, an antifoam, a fluorescent material, a biocide and mixtures thereof.

12. Adhesive composition according to any one of the preceding claims, having a viscosity from 10 000 to 45 000 mPa.s, preferentially from 20 000 to 35 000 mPa.s, said viscosity being measured using a Brookfield viscometer with a No. 6 spindle at a speed of 20 rpm at room temperature (about 20°C) and at atmospheric pressure.

13. Process for applying a flexible surface covering to a substrate, comprising the following steps:
- applying a layer of adhesive composition, according to any one of the preceding claims, to the substrate and/or the flexible surface covering; and
- applying the flexible surface covering to the substrate.

14. Process for applying a flexible surface covering to a substrate according to Claim 13, in which an amount of adhesive composition of less than or equal to 290 g/m², preferentially less than or equal to 280 g/m², very preferentially less than or equal to 270 g/m², is applied.

15. Use of the adhesive composition according to any one of Claims 1 to 12, for applying a flexible surface covering to a substrate; preferentially for applying a flexible surface covering chosen from polymeric coverings or carpeting to a floor.
